# EUROPÄISCHE PATENTANMELDUNG

(11) **EP 1 400 715 A1**
(43) Veröffentlichungstag der Anmeldung: **24.03.2004**
(21) Anmeldenummer: 02021052.2
(22) Anmeldetag: 20.09.2002
(51) Int. Cl.: F16D 21/06, F16D 25/12

(54) **Kupplungssystem und Halteanordnung zum Halten wenigstens einer Kupplungsanordnung des Kupplungssystems in einem momentanen oder vorgegebenen Einrückzustand**

(71) Anmelder: ZF Sachs AG, 97424 Schweinfurt (DE)
(72) Erfinder: Ebert, Angelika, 97421 Schweinfurt (DE); Müller, Ingo, 97421 Schweinfurt (DE); Grosspietsch, Wolfgang, 97421 Schweinfurt (DE); Wirth, Thomas, 97523 Schwanfeld (DE); Heiartz, Markus, 97084 Würzburg (DE); Orlamünder, Andreas, 97422 Schweinfurt (DE); Reisser, Wolfgang, 97526 Sennfeld (DE)
(74) Vertreter: Jordan, Volker, Dr.

(57) **Zusammenfassung**

Für ein Kupplungssystem, umfassend eine Reibungskupplungseinrichtung (10) zur Anordnung im Antriebsstrang eines Kraftfahrzeugs mit wenigstens einer gegen in Ausrückrichtung wirkenden mechanischen Rückstellkräften einrückbaren Kupplungsanordnung (12, 32, 34; 14, 32, 36) und eine Betätigungseinrichtung (200, 400) zum Einleiten von im Einrücksinne gegen die Rückstellkräfte wirkenden, auf Betätigungskräften einer Aktuatoranordnung (402, 404) beruhenden Einrückkräften in die Reibungskupplungseinrichtung, um die Kupplungsanordnung im Einrücksinne zu betätigen, wird vorgeschlagen, dass eine der Reibungskupplungseinrichtung oder/und der Kupplungsanordnung oder/und der Betätigungseinrichtung oder/und der Aktuatoranordnung zugeordnete Halteanordnung (430) vorgesehen ist, mittels der die Kupplungsanordnung gegen die Wirkung der Rückstellkräfte unabhängig von der Erzeugung von Betätigungskräften durch die Aktuatoranordnung (402, 404) in einem momentanen Einrückzustand oder einem dem momentanen Einrückzustand zugeordneten Halte-Einrückzustand haltbar ist.

## Beschreibung

Die Erfindung betrifft ein Kupplungssystem, umfassend eine Reibungskupplungseinrichtung zur Anordnung im Antriebsstrang eines Kraftfahrzeugs mit wenigstens einer gegen in Ausrückrichtung wirkenden mechanischen Rückstellkräften einrückbaren Kupplungsanordnung und eine Betätigungseinrichtung zum Einleiten von im Einrücksinne gegen die Rückstellkräfte wirkenden, auf Betätigungskräften einerAktuatoranordnung beruhenden Einrückkräften in die Reibungskupplungseinrichtung, um die Kupplungsanordnung im Einrücksinne zu betätigen. Derartige Kupplungssystemedes NORMALERWEISE-OFFEN-Typs (NORMALLYOPEN- bzw. NO-Typs) sind vor allem als nasslaufende Kupplungen der Lamellenbauart bekannt, und zwar speziell auch als so genannte Doppelund Mehrfach-Kupplungen für so genannte Lastschalt- oder Doppelkupplungsgetriebe, bei denen jede von mehreren Kupplungsanordnungen (beim hier angesprochenen bekannten Typ der Lamellen-Bauart) einer eigenen Getriebeeingangswelle zugeordnet ist. Derartige Doppelkupplungen haben in jüngerer Zeit größere Aufmerksamkeit erfahren, da sie auf Grundlage einer so genannten "Überschneidungsschaltung in Verbindung mit einem automatisiert schaltbaren Getriebe einen hohen Fahrkomfort ähnlich wie bei einem herkömmlichen Automatgetriebe mit Drehmomentwandler versprechen, aber demgegenüber einen höheren Wirkungsgrad aufweisen. Eine von der Anmelderin favorisierte Bauart für eine derartige nasslaufende Doppelkupplung ist beispielsweise aus der DE 100 04 179 A1 bekannt.

Von Interesse ist aber auch die Verwendung von trockenlaufenden Doppeloder Mehrfach-Kupplungen insbesondere der Reibscheibenbauart. Es wird beispielsweise auf die EP 0 931 951 A1 und die DE 35 26 630 A1 verwiesen.

Trockenlaufende Kupplungen der Reibscheibenbauart sind herkömmlich vom NORMALERWEISE-GESCHLOSSEN-Typ (NORMALLY CLOSED bzw. NC-Typ), und werden nur während des Schaltvorgangs betätigt. Im Falle einer automatisierten Kupplung liegt die Einschaltdauer des Aktuator typischerweise zwischen 1 bis 5% der Betriebsdauer des Fahrzeugs. Für Doppel- oder Mehrfach-Kupplungssysteme ist es aus Sicherheitsgründen hingegen vorzuziehen, dass die Kupplungsanordnungen der jeweiligen Kupplungseinrichtung vom Typ NORMALERWEISE-OFFEN sind. Hierdurch wird gewährleistet, dass im Fehlerfall nicht beide bzw. mehrere Kupplungsanordnungen gleichzeitig geschlossen sind bzw. schließen und der Antriebsstrang hierdurch verspannt oder sogar schwerwiegende Beschädigungen im Antriebsstrang auftreten. Aufgrund der herkömmlichen Ansätze müsste bei trockenlaufenden Kupplungen für das NORMALERWEISE-OFFEN-Systemverhalten die beim Betrieb des Fahrzeugs ständig benötigte Anpresskraft für die jeweilige Kupplungsanordnung ständig aktiv durch einen Aktuator aufgebracht werden. Dies ist weder hinsichtlich der Energiebilanz noch hinsichtlich der Belastung der Bauteile in der Kette zwischen den Reibflächen, insbesondere der Anpressplatte, der jeweiligen Kupplungsanordnung einerseits und dem zugeordneten Aktuator andererseits vorteilhaft. Bei nasslaufenden Doppel- oder Mehrfach-Kupplungen, wie etwa bei der vorstehend angesprochenen Bauart der Anmelderin, wird das vorzuziehende NORMALERWEISE-OFFEN-Systemverhalten dadurch erreicht, dass die jeweilige Kupplungsanordnung über eine hydraulische Betätigungseinrichtung aktiv geschlossen wird. Auch hier hat das Erfordernis des aktiven Schließens der jeweiligen Kupplungsanordnung einen negativen Effekt auf die Energiebilanz, da nämlich wegen in der Praxis schlecht zu vermeidenden Leckagen in Drehdurchführungen und dergleichen ständig Druckmedium nachgefördert werden muss, um die benötigte Anpresskraft aufzubringen. Durch den Einsatz von Druckspeichern kann die Einschaltdauer von etwa elektromotorisch angetriebenen Pumpen aber auf ein den meisten Anforderungen genügendes Maß begrenzt werden.

Aufgabe der Erfindung ist, zur zumindest teilweisen Lösung der angsprochenen Probleme einen Lösungsansatz anzugeben. Die Erfinder haben sich gefragt, ob bzw. wie es bei einem Kupplungssystem der eingangs angegebenen Art etwa im Hinblick auf die Energiebilanz oder/und die Belastbarkeit von Bauteilen möglich sein könnte, das Kupplungssystem bzw. die wenigstens eine Kupplungsanordnung desselben in einem Einrückzustand zu halten, die eine Aufrechterhaltung oder zumindest annähernde Aufrechterhaltung eines momentanen Betriebszustands oder Fahrzustands des Fahrzeugs ermöglicht, ohne dass durch die Aktuatoranordnung ständig Betätigungskräfte erzeugt werden müssen.

Erfindungsgemäß wird vorgeschlagen, dass eine der Reibungskupplungseinrichtung oder/und der Kupplungsanordnung oder/und der Betätigungseinrichtung oder/und der Aktuatoranordnung zugeordnete Halteanordnung vorgesehen ist, mittels der die Kupplungsanordnung gegen die Wirkung der Rückstellkräfte unabhängig von der Erzeugung von Betätigungskräften durch die Aktuatoranordnung in einem momentanen Einrückzustand oder einem dem momentanen Einrückzustand zugeordneten Halte-Einrückzustand haltbar ist.

Mittels der erfindungsgemäßen Halteanordnung, die beispielsweise eine Art Verriegelungsmechanismus oder eine Art Bremsmechanismus aufweisen kann, ist es möglich, den momentanen Einrückzustand oder zumindest einem dem momentanen Einrückzustand zugeordneten, beispielsweise benachbarten Halte-Einrückzustand zu halten, ohne dass die den Einrücken der Kupplungsanordnung dienende Aktuatoranordnung ständig Betätigungskräfte erzeugen muss. Es kann also beispielsweise eine aktuelle Position eine Anpressplatte oder allgemein ein Anpresszustand der Reibflächenanordnung vermittels der Halteanordnung aufrechterhalten oder statt der momentanen Position bzw. des momentanen Zustands eine zugeordnete Halte-Position oder ein zugeordneter Halte-Zustand aufrechterhalten werden, ohne dass etwa ein Elektromotor der Kupplungsaktuatorik oder dergleichen dauerhaft bestromt werden muss. Die Halteanordnung wird für die Aufrechterhaltung der Position bzw. des Zustands bzw. für das Halten der Halte-Position bzw. des Halte-Zustands in der Regel lediglich eine Hilfsenergie benötigen.

Um für das Kupplungssystem insgesamt ein NORMALERWEISE-OFFEN-Systemverhalten zu erhalten, müssen alle Bestandteile bzw. Teilsysteme des Systems, die einen momentanen Einrückzustand einstellen bzw. halten können, vom Typ NORMALERWEISE-OFFEN sein. Dies gilt auch für die Halteanordnung, die einerseits erfindungsgemäß dafür ausgelegt ist, den angesprochenen Einrückzustand bzw. Halte-Einrückzustand zu halten, und andererseits, zumindest in der Regel, selbst vom Typ NORMALERWEISE-OFFEN sein sollte, um beispielsweise bei energiefreiem System, wenn etwa die elektrische Energieversorgung des Kraftfahrzeugs zusammengebrochen ist oder die Steuerelektronik bzw. zugehörige Endstufen der Leistungselektronik ausgefallen sind bzw. im Fehlerfall abgeschaltet sind, insgesamt ein NORMALERWEISE-OFFEN-Systemverhalten zu garantieren. Dasjeweilige NORMALERWEISE-OFFEN-Systemverhalten kann auf einfache Weise durch mechanische Kraftspeicher erreicht werden, die etwa im Falle der Kupplungsanordnung auf die Reibflächen oder/und ein zugeordnetes Betätigungselement in Ausrückrichtung wirken bzw. im Falle der Halteanordnung einen Halteeingriff zwischen einander zugeordneten Komponenten aufheben. Hier bestehen grundsätzlich diverse Möglichkeiten, von denen im Folgenden einige bevorzugte konkret angesprochen werden.

Hinsichtlich der Ausbildung der Betätigungseinrichtung und der Aktuatoranordnung bestehen vielfältige Möglichkeiten. Geeignete Stelleinrichtungen für die Betätigung der Kupplungsanordnung bzw. einer jeweiligen mehrerer Kupplungsanordnungen der Reibungskupplungseinrichtung sind beispielsweise aus der DE 37 06 849 A 1 und der DE 197 29 997 A 1 bekannt. Betreffend eine im Zusammenhang mit den Erfindungsvorschlägen vorteilhaft einsetzbare Betätigungseinrichtung wird auf die am 09.10.2001 eingereichte deutsche Patentanmeldung "Betätigungseinrichtung für eine Reibungskupplungseinrichtung, ggf. Doppel- oder Mehrfach-Reibungskupplungseinrichtung", amtliches Aktenzeichen 101 49 703.2 bzw. hierzu zur Einreichung gekommene bzw. zur Einreichung kommende, deren Priorität in Anspruch nehmende Nachanmeldungen verwiesen.

So kann die Betätigungseinrichtung vorteilhaft wenigstens ein der Kupplungsanordnung zugeordnetes Betätigungsglied umfassen, das relativ zu wenigstens einem axial im Wesentlichen feststehenden Stützglied zum Ausüben der Einrückkräfte axial verstellbar ist und zu einem der Kupplungsanordnung zugeordneten Aktuator gehört oder unter Vermittlung eines der Kupplungsanordnung zugeordneten Aktuators axial relativ zum Stützglied verstellbar ist. Vorteilhaft kann ein derartiger Eingriff zwischen dem Betätigungsglied und dem Stützglied vorgesehen sein, das eine unter Vermittlung des Aktuators dem Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird, um die Kupplungsanordnung im Einrücksinne zu betätigen. Im Hinblick auf das angesprochene NORMALERWEISE-OFFEN-Systemverhalten wird weiterbildend vorgeschlagen, auf Grundlage der Rückstellkräfte dem Betätigungsglied eine zur Translationsbewegung entgegengesetzte Rück-Translationsbewegung erteilbar ist, die auf Grundlage des Eingriffs zwischen dem Betätigungsglied und dem Stützglied in eine zur Drehbewegung entgegengesetzte Rück-Drehbewegung des Betätigungsglieds relativ zu dem axial abgestützten Stützglied umgesetzt wird.

Man kann vorteilhaft vorsehen, dass das Betätigungsglied mit einem Ausgangsteil des vorzugsweise elektromotorischen Aktuators bewegungsverkoppelt oder bewegungsverkoppelbar ist. Das Ausgangsteil kann ein um eine Achse dreh- oder schwenkbares Ausgangsteil sein.

In der Regel wird es vorteilhaft sein, eine Koppelmechanik vorzusehen, über die das Betätigungsglied mit dem Ausgangsteil bewegungsverkoppelt oder bewegungsverkoppelbar ist. Die Koppelmechanik kann wenigstens ein bewegbar, insbesondere dreh- oder schwenkbar angeordnetes Eingangsteil, das mit dem Ausgangsteil des Aktuators bewegungsverkoppelt oder bewegungsverkoppelbar ist, aufweisen. Ferner kann die Koppelmechanik vorteilhaft wenigstens ein bewegbar, insbesondere dreh- oder schwenkbar angeordnetes Ausgangsteil, das mit dem Betätigungsglied bewegungsverkoppelt oder bewegungsverkoppelbar ist, aufweisen. Es sei angemerkt, dass das Eingangsteil und das Ausgangsteil von einem einzigen Bauteil gebildet sein können oder Teile einer integral oder einteilig ausgeführten Bauteilgruppe oder eines einteilig ausgeführten Bauteils sein können.

Im Hinblick auf das angesprochene NORMALERWEISE-OFFEN-Systemverhalten wird weiterbildend vorgeschlagen, dass das Ausgangsteil des Aktuators oder/und die Koppelmechanik auf Grundlage der Rückstellkräfte in Richtung einer einem ausgerückten Zustand der Kupplungsanordnung entsprechenden Stellung verstellbar ist.

Die Halteanordnung kann auf wenigstens eines der vorstehend angesprochenen Teile oder Glieder wirken. Allgemein wird vorgeschlagen, die Halteanordnung dafür ausgebildet ist, wenigstens ein Glied einer von einem/dem Aktuator zu einer miteinander in paarweisen reibschlüssigen Eingriff bringbaren Reibflächenanordnung führenden Betätigungskette in einer momentanen Stellung oder einer der momentanen Stellung zugeordneten, zu dieser benachbarten Haltestellung zu halten. Dabei ist zu beachten, dass die Betätigungskette das/ein Ausgangsteil des Aktuators sowie ggf. wenigstens ein mit dem Ausgangsteil bewegungsverkoppeltes internes Teil, insbesondere Übertragungsteil oder Betätigungsteil, innerhalb des Aktuators umfassen kann. Ferner kann die Betätigungskette wenigstens ein wenigstens eine Reibfläche der Reibflächenanordnung aufweisendes Bauteil der Kupplungsanordnung umfassen. Bezug nehmend auf die oben angesprochenen Möglichkeiten der Ausbildung der Betätigungseinrichtung wird darauf hingewiesen, dass die Betätigungskette das Betätigungsglied sowie ggf. wenigstens ein Koppelteil, insbesondere Eingangsteil oder/und Ausgangsteil, der Koppelmechanik umfassen kann.

Allgemein wird vorgeschlagen, dass das betreffende Glied, also das Glied, welches durch die Halteanordnung in der momentanen Stellung oder einer der momentanen Stellung zugeordneten, zu dieser benachbarten Haltestellung gehalten werden kann, mit einem zugeordneten Halteglied der Halteanordnung in Halteeingriff bringbar ist. Der Halteeingriff kann ein formschlüssiger Eingriff oder ein kraftschlüssiger, beispielsweise reibschlüssiger Eingriff, sein. Um gewissermaßen eine "stufenlose" Verriegelbarkeit bzw. Fixierbarkeit des betreffenden Glieds vorzusehen, wird vorgeschlagen, dass das betreffende Glied über einen diesem zugeordneten kontinuierlichen Bewegungsbereich in jeder beliebigen momentanen Position durch den Halteeingriff mit dem Halteglied haltbar ist. Für viele Zwecke wird es aber auch ausreichen, wenn das betreffende Glied nur in diskreten Schritten oder vorgegebenen (beispielsweise geometrisch vorgegebenen) Stufen verriegelbar bzw. fixierbar ist. Hierzu wird vorgeschlagen, dass das betreffende Glied über einen diesem zugeordneten kontinuierlichen Bewegungsbereich nur in einer Mehrzahl von vorgegebenen diskreten Haltepositionen durch den Halteeingriff mit dem Halteglied haltbar ist.

In der Regel wird wenigstens ein gegenüber dem Aktuator gesondertes Stellglied vorgesehen sein, mittels dem das betreffende Glied und das zu geordnete Halteglied in Halteeingriff bringbar ist. Betreffend die Verriegelung bzw. Fixierung des betreffenden Glieds nur in einer Mehrzahl von vorgegebenen diskreten Haltepositionen wird in diesem Zusammenhang vorgeschlagen, dass auf Grundlage eines über die Kupplungsanordnung zu übertragenden Drehmoments oder/und auf Grundlage einer ggf. auftretenden Schlupfdrehzahl der Kupplungsanordnung das Stellglied ansteuerbar oder/und das Halteglied relativ zu dem betreffenden Glied verstellbar ist, um eine auf das zu übertragende Drehmoment, oder/und einer Vorgabe betreffend die Schlupfdrehzahl oder die Schlupffreiheit abgestimmte Halteposition einzustellen, erforderlichenfalls im Zusammenwirken mit einer Verstellung des betreffenden Glieds mittels dem Aktuator. So wird man beim Einsatz einer Verriegelung, die in diskreten Schritten oder etwa geometrisch vorgegebenen Stufen arbeitet, in der Regel eine akzeptable Anpassung an den jeweiligen Lastzustand der Kupplungsanordnung erreichen können. Hierbei wird es in der Regel zweckmäßig sein, eine solche Verriegelungsstufe auszuwählen, die das momentan übertragene Drehmoment abdeckt. Wird hingegen die Obergrenze der Verriegelungsstufe überschritten, so tritt Kupplungsschlupf (eine Relativdrehzahl) auf. Der Kupplungsschlupf bzw. die Relativdrehzahl kann vorteilhaft als Eingangssignal zur Aktivierung des Stellglieds oder/und des Aktuators dienen, um die nächste Verriegelungsstufe einzustellen, ggf. einzurasten.

Im Hinblick auf das angesprochene NORMALERWEISE-OFFEN-Systemverhalten wird vorgeschlagen, dass das betreffende Glied und das zugeordnete Halteglied durch das Stellglied gegen auf wenigstens eines dieser Glieder wirkende mechanische Rückstellkräfte in Halteeingriff bringbar sind und der Halteeingriff auf Grundlage der Rückstellkräfte aufhebbar ist.

Hinsichtlich der Ausbildung des auch als Steller bezeichenbaren Stellglieds bestehen vielfältige Möglichkeiten. Es wird beispielsweise daran gedacht, dass das Stellglied wenigstens einen Elektromotor, wenigstens einen elektrisch erregbaren Magneten, wenigstens ein Bimetallelement mit zugeordneter Heizelementanordnung, wenigstens eine Piezoelementanordnung oder wenigstens eine auf Grundlage eines Druckfluids betätigbare Kraftzylinderanordnung zum Erzeugen von Stellkräften aufweist.

Bezug nehmend auf die oben-angesprochenen Ausführungsmöglichkeiten für die Betätigungseinrichtung wird beispielsweise daran gedacht, dass das Betätigungsglied das betreffende Glied ist. Eine andere Möglichkeit ist, dass das Ausgangsteil des Aktuators oder ein damit bewegungsverkoppeltes internes Teil des Aktuators das betreffende Glied ist. Ferner kann das oder ein Koppelteil der Koppelmechanik, insbesondere das Eingangsteil oder/und das Ausgangsteil der Koppelmechanik, das betreffende Glied sein.

Eine besonders bevorzugte Ausführungsmöglichkeit der Betätigungseinrichtung zeichnet sich dadurch aus, dass das Ausgangsteil des Aktuators und das/ein Eingangsteil der Koppelmechanik über ein Schnecken- oder Zahnradgetriebe bewegungsverkoppelt sind oder ein eine Bewegungsverkoppelung vorsehendes Schnecken- oder Zahnradgetriebe bilden. Hierzu wird speziell vorgeschlagen, dass das als Zahnrad oder Zahnradsegment ausgeführte Eingangsteil der Koppelmechanik oder ein damit bewegungsverkoppeltes oder bewegungsverkoppelbares Stößelelement zur direkten oder indirekten Ankoppelung am Betätigungsglied das betreffende Glied ist.

Aus den obigen Ausführungen ergibt sich schon, dass betreffend die Kupplungsanordnung vor allem daran gedacht wird, dass diese eine trockenlaufende Kupplungsanordnung, und zwar vorzugsweise eine Kupplungsanordnung der Reibscheibenbauart, ist. Ferner ergibt sich aus den obigen Ausführungen schon, dass die Kupplungseinrichtung eine Doppel- oder Mehrfach-Kupplungseinrichtung sein kann, mit einem einem ersten Getriebezug zugeordneten ersten Kupplungsanordnung und einer einem zweiten Getriebezug zugeordneten zweiten Kupplungsanordnung, die unabhängig voneinander mittels eines jeweiligen Aktuators betätigbar sind. Die jeweilige Kupplungsanordnung kann speziell einer jeweiligen, einen Eingang für den jeweiligen Getriebezug darstellenden Getriebeeingangswelle zugeordnet sein.

Man kann in diesem Zusammenhang vorsehen, dass die mit beiden Kupplungsanordnungen in Wirkverbindung stehende oder bringbare Halteanordnung mit einem einzigen Stellglied ausgeführt ist, unter dessen Vermittlung wahlweise die erste oder die zweite Kupplungsanordnung unabhängig von der Erzeugung von Betätigungskräften durch den jeweiligen Aktuator in einem momentanen Einrückzustand oder einem dem momentanen Einrückzustand zugeordneten Halte-Einrückzustand haltbar ist. Es wird in diesem Zusammenhang speziell daran gedacht, dass zu einem Zeitpunkt nur eine der beiden Kupplungsanordnungen in einem momentanen Einrückzustand oder einem dem momentanen Einrückzustand zugeordneten Halte-Einrückzustand haltbar ist.

Man kann also durchaus vorsehen, dass die vom Stellglied aufbringbare Haltekraft abwechselnd nur auf eines der Teilsysteme wirkt, was auf Grundlage einer geschickten Anordnung der verschiedenen Komponenten praktisch ohne weiteres realisierbar ist. Für die meisten Anforderungen wird es ausreichen, dass jeweils nur eines der Teilsysteme, nämlich in der Regel das momentan drehmomentführende Teilsystem, mittels der Halteanordnung verriegelt bzw. im Einrückzustand bzw. Halte-Einrückzustand gehalten werden kann. Aus der Verwendung nur eines Stellglieds ergeben sich entsprechende Kostenvorteile.

Häufig wird es aber zweckmäßig sein, zwei voneinander unabhängige Halteanordnungen vorzusehen, um die beiden Kupplungsanordnungen unabhängig voneinander sowie unabhängig von der Erzeugung von Betätigungskräften durch den jeweiligen Aktuator in einem momentanen Einrückzustand oder einem dem momentanen Einrückzustand zugeordneten Halte-Einrückzustand halten zu können. Es können gemäß diesem Vorschlag beide Teilsysteme zeitgleich verriegelt bzw. in einem momentanen Einrückzustand bzw. Halte-Einrückzustand gehalten werden. Man kann beispielsweise die Kupplungsscheibe oder allgemein die Reibflächenanordnung des momentan nicht drehmomentführenden Teilgetriebes fest einspannen, um ein "Verbrennen des Kupplungsbelages" in Folge eines Anschleifens/Anstoßens des Belags an rotierenden Bauteilen (etwa zentrale Zwischenplatte, Anpressplatte) zu verhindern.

Die Erfindung stellt ferner auch eine Halteanordnung zum Halten wenigstens einer Kupplungsanordnung eines erfindungsgemäßen Kupplungssystems in einen momentanen Einrückzustand oder einem dem mometanen Einrückzustand zugeordneten Halte-Einrückzustand unabhängig von der Erzeugung von Betätigungskräften durch eine dem Einrücken der Kupplungsanordnung dienenden Aktuatoranordnung bereit.

Die Erfindung wird im Folgenden anhand von in den Figuren gezeigten Ausführungsbeispielen näher erläutert.
- Fig. 1: zeigt schematisch ein Beispiel einer trocken laufenden Doppelkupplung der Reibscheibenbauart, und zwar des NORMALERWEISE-OFFEN-Typs.
- Fig. 2: zeigt ein konkreteres Ausführungsbeispiel für eine Kupplung der in Fig. 1 gezeigten Art zusammen mit zugehöriger Aktuatorik.
- Fig. 3: zeigt in einer perspektivischen Ansicht einen Bereich der Anordnung gemäß Fig. 2, nämlich zwei Aktuatoren mit zugehörigen Koppelelementen zur Übertragung von Stellkräften auf ein Betätigungsmodul der Doppelkupplung.
- Fig. 4: zeigt in den Teilfiguren 4a und 4b eine Alternative zur Anordnung gemäß Fig. 3, wobei Fig. 4a auch zur näheren Erläuterung eine Ausführungsvariante einer erfindungsgemäßen Halteanordnung dient.
- Fig. 5: ist ein Beispiel zur Erläuterung einer weiteren Ausführungsvariante einer erfindungsgemäßen Halteanordnung.

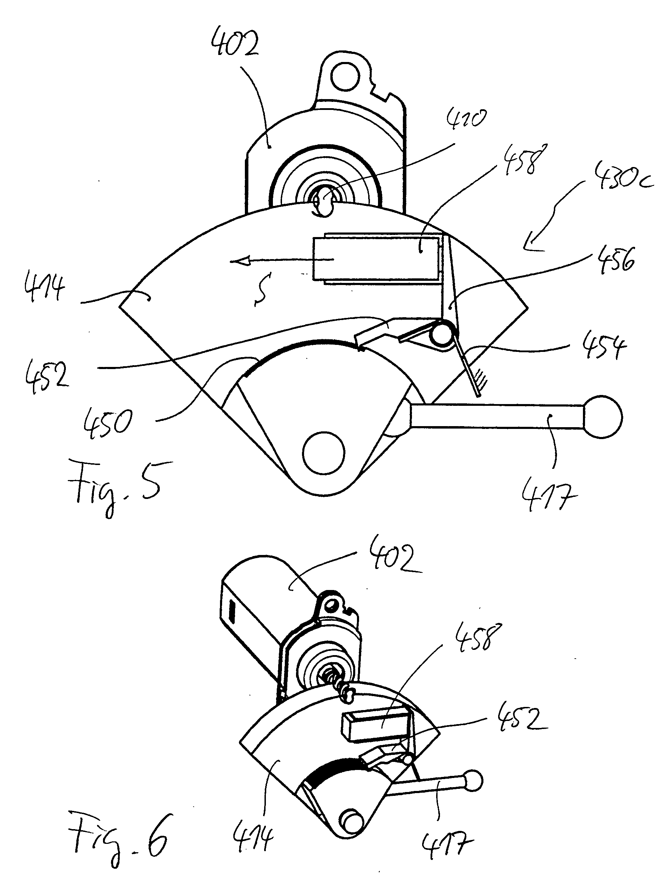

- Fig. 6: zeigt die Anordnung der Fig. 5 in einer perspektivischen Ansicht.

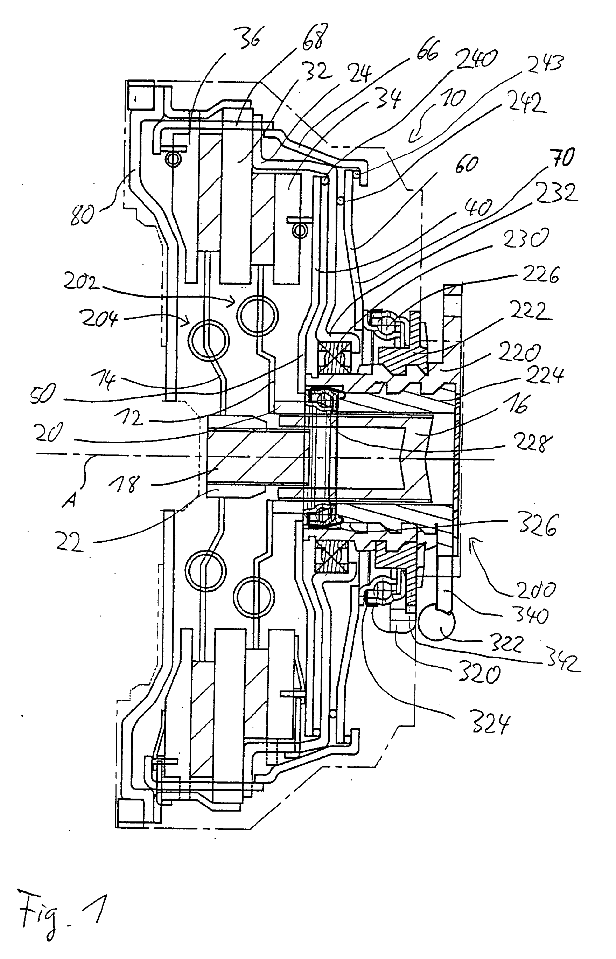

Fig. 1 zeigt eine Doppelkupplung 10 der Reibscheibenbauart, die eine erste Kupplungsscheibe 12 einer ersten Kupplungsanordnung und eine zweite Kupplungsscheibe 14 einer zweiten Kupplungsanordnung aufweist. Die erste Kupplungsscheibe 12 steht mit einer als Hohlwelle ausgeführten ersten Getriebeeingangswelle 16 und die zweite Kupplungsscheibe 14 steht mit einer sich koaxial durch die erste Getriebeeingangswelle 16 erstreckenden zweiten Getriebeeingangswelle 18 auf an sich bekannte Art und Weise in Momentenübertragungsverbindung. Die mit integrierten Torsionsschwingungsdämpfern 202 und 204 ausgeführten Kupplungsscheiben weisen beispielsweise eine Koppelnabe 20 bzw. 22 auf, die auf die betreffende Getriebeeingangswelle aufgeschoben ist und mit dieser über Mitnahmeformationen drehfest gekoppelt ist.

Die Doppelkupplung 10 weist eine Gehäuseanordnung 24 auf, die beispielsweise mehrere durch Schraubbolzen oder dergleichen miteinander verbundene Gehäuseteile umfasst. Die Gehäuseanordnung 24 ist über eine Flexplatte 80 an der Abtriebswelle 84 der Antriebseinheit, insbesondere einer Brennkraftmaschine, angebunden.

Ein beidseitig Reibbeläge tragender ringförmiger Abschnitt der ersten Kupplungsscheibe 12 ist axial zwischen einem ein Widerlager für die Kupplungsscheibe bildenden Druckplattenabschnitt 32 der Gehäuseanordnung und einer in der Gehäuseanordnung axial beweglich gehaltenen ersten Anpressplatte 34 angeordnet. Die zweite Kupplungsscheibe 14 ist mit ihrem beidseitig Reibbeläge tragenden Ringbereich axial zwischen dem ein Widerlager für die Kupplungsscheibe bildenden Druckplattenabschnitt 32 und einer in der Gehäuseanordnung axial beweglich gehaltenen zweiten Anpressplatte 36 gehalten. Die beiden Anpressplatten sind jeweils auf an sich bekannte Art und Weise durch Tangentialfedern (Tangentialblattfedern) oder dergleichen in der Gehäuseanordnung 24 gehalten und jeweils in Öffnungs- oder Ausrückrichtung federvorgespannt.

Der ersten Anpressplatte 34 ist eine erste Teller- oder Membranfeder 40 und der zweiten Anpressplatte 36 ist eine zweite Teller- oder Membranfeder 60 zugeordnet. Für beide Federn 40 und 60 ist eine Schwenkabstützung an der Gehäuseanordnung vermittels eines jeweiligen Abstützrings 240 bzw. 242 vorgesehen. Die Membranfedern 40 und 60 wirken in erster Linie als Betätigungshebel, die zum Einrücken der jeweiligen Anpressplatte 34 bzw. 36 gegen die jeweilige, an dem Widerlager 32 axial abstützbaren Kupplungsscheibe mit ihren Betätigungszungen oder Betätigungshebeln 50 bzw. 70 in Richtung zu den Kupplungsscheiben, also in Fig. 1 nach links, zu drücken ist. Die in der Art eines einarmigen Hebels angeordnete Membranfeder 40 wirkt dabei direkt oder über ein Zwischenelement auf die in enger Nachbarschaft zur Feder angeordnete Anpressplatte 34. Die in der Art eines zweiarmigen Hebels angeordnete Membranfeder 60 steht hingegen über ein unter Vermittlung eines Abstützrings 243 an ihrem Außenradius angreifendes Kraftübertragungsglied 66 und eine sich durch die Gehäuseanordnung und den Druckplattenabschnitt 32 erstreckende Zugankeranordnung 68 mit der Anpressplatte 36 in Verbindung.

Die von den beiden Kupplungsscheiben 12 und 14 und den zugehörigen Komponenten 32, 34 und 36 gebildeten beiden Kupplungsanordnungen sind über ein zur Doppelkupplung zugehöriges Betätigungsmodul 200 betätigbar. Das Betätigungsmodul weist eine am Getriebegehäuse insbesondere gegen ein Verdrehen gesicherte Zentralhülse 220 auf, die eine Außenhülse 222 und eine Innenhülse 224 trägt. Die Außenhülse 222 und die Innenhülse 224 stehen jeweils über ein Außengewinde bzw. Innengewinde mit der Zentralhülse 220 in Eingriff, derart, dass eine Verdrehung der Außenhülse oder/und der Innenhülse relativ zur Zentralhülse eine axiale Verlagerung der betreffenden Hülse (Außenhülse bzw. Innenhülse) induziert. Die Außenhülse 222 ist mit einem Einrücklager 226 versehen, und die Innenhülse 224 ist mit einem Einrücklager 228 versehen, über die unter Vermittlung der Außenhülse bzw. Innenhülse axiale Kräfte auf die Membranfederzungen der Membranfeder 40 bzw. 60 ausgeübt werden können, um die Betätigungszungen der jeweiligen Membanfeder in Richtung zur Antriebseinheit auszulenken und damit die erste oder/und zweite Kupplungsanordnung in Einrückrichtung zu betätigen. Die Einrücklager 226 und 228 können mit Federblechen 324 und 326 ausgeführt sein, um eine Selbstzentrierung des jeweiligen Lagers vorzusehen.

Um der Außenhülse und der Innenhülse eine entsprechende Drehbewegung in Einrückrichtung zu erteilen; können die Hülsen beispielsweise mit radial vorstehenden Hebelarmen oder Hebelabschnitten ausgeführt sein, auf die ein jeweils zugeordnetes Stellglied wirkt. Ein Hebelarm der Innenhülse ist in Fig. 1 mit 340 und ein Hebelarm der Außenhülse ist in Fig. 1 mit 342 bezeichnet. 322 und 320 bezeichnen einen am betreffenden Hebelarm oder Hebelabschnitt vorgesehenen Kraftangriffspunkt, beispielsweise in der Art einer Kugelkalotte, um eine im Wesentlichen tangential gerichtete Betätigungskraft auf die jeweilige Hülse ausüben zu können.

Um einen geschlossenen Axialkraftfluss innerhalb der die eigentliche Doppelkupplung 10 und das Betätigungsmodul 200 umfassenden Baueinheit vorzusehen, steht die Zentralhülse 220 über ein Radial- und Axiallager 230 mit der Gehäuseanordnung der Doppelkupplung in Abstützbeziehung. 232 bezeichnet einen hierfür vorgesehenen Ringabschnitt eines Gehäuseteils der Gehäuseanordnung. Das Radial- und Axiallager 230 kann durch einen nicht dargestellten Sicherungsring zwischen dem Ringabschnitt 232 und der Zentralhülse 220 axial festgelegt sein.

Zu weiteren Einzelheiten der Doppelkupplungskonstruktion gemäß Fig. 1 und des Betätigungsmoduls 200 sowie zu vorteilhaften Ausführungsvarianten hierzu wird auf die deutsche Patentanmeldung "Betätigungseinrichtung für eine Reibungskupplungseinrichtung, ggf. Doppel- oder Mehrfach-Reibungskupplungseinrichtung" der Anmelderin, amtliches Aktenzeichen 101 49 703.2, vom 09.10.2001 bzw. Nachanmeldungen hierzu, verwiesen.

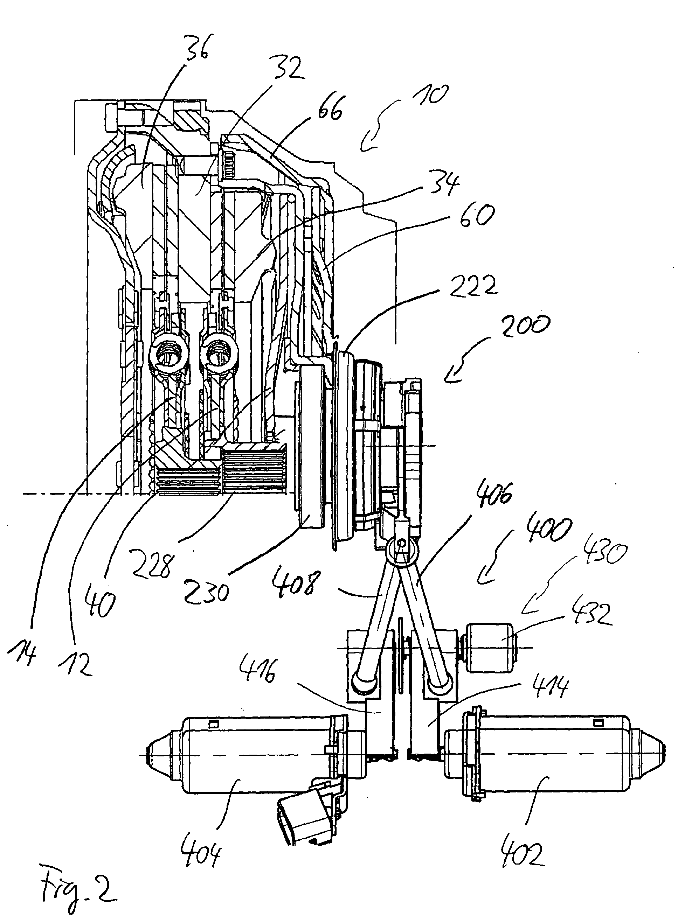

Fig. 2 zeigt eine etwas detaillierter dargestellte Doppelkupplung 10 der anhand Fig. 1 erläuterten Art samt einem zugehörigen Betätigungsmodul 200 und über das Modul auf die beiden Kupplungsanordnungen der Doppelkupplung wirkende Aktuatorik 400. Ohne Beschränkung der Allgemeinheit kann man annehmen, dass das Betätigungsmodul 200 von der in Fig. 1 gezeigten oder ähnlicher Art ist und eine stationäre Stützhülse, beispielsweise Zentralhülse und relativ zu dieser verdrehbare und axial bewegbare Betätigungshülsen, beispielsweise eine Innenhülse oder Außenhülse, aufweist, wobei die Betätigungshülsen auf geeignete Weise, beispielsweise über ein Gewinde, mit der Stützhülse in Eingriff stehen, um eine Drehbewegung in eine Axialbewegung umzusetzen. Betreffend die Doppelkupplung 10 und das Betätigungsmodul 200 der Fig. 2 sind für analoge oder einander entsprechende Bauteile die gleichen Bezugszeichen wie in Fig. 1 verwendet, so dass weitere Erläuterungen entbehrlich sind. Die Aktuatorik weist zwei elektromechanische Aktuatoren 402 und 404 insbesondere auf Elektromotorbasis auf, die über eine Koppelmechanik 406 bzw. 408 auf eine jeweils zugeordnete Betätigungshülse des Betätigungsmoduls 200 und damit über die Membranfeder 40 bzw. 60 auf eine jeweils zugeordnete der beiden Kupplungsanordnungen wirken.

Ein wichtiger Gesichtspunkt ist, dass die gesamte Betätigungskette beginnend mit den Elektromotoren der Aktuatoren 402 und 404 bis hin zu den Anpressplatten 34 und 36 ein NORMALERWEISE-OFFEN-Systemverhalten zeigen sollten, damit etwa im Falle von stromlosen Elektromotoren der Aktuatoren die beiden Kupplungsanordnungen unter der Wirkung ihrer Tangentialfedern den geöffneten bzw. ausgerückten Zustand einnehmen bzw. diesen halten. Eine derartige Auslegung der gesamten Betätigungskette ist nicht zwingend, aber im Hinblick auf die Vermeidung etwa von Verspannungen im Antriebsstrang, ggf. sogar von Beschädigungen im Antriebsstrang, sehr sinnvoll. Eine derartige Auslegung hat allerdings zur Folge, dass nach herkömmlichen Ansätzen die jeweils drehmomentübertragende Kupplungsanordnung ständig vermittels des jeweiligen Aktuators mit Einrückkräften beaufschlagt werden muss, was aus energetischen Gründen und auch im Hinblick auf die Belastbarkeit der verschiedenen Komponenten der Betätigungskette nicht optimal erscheint. Um hier eine Verbesserung zu erreichen, schlägt die Erfindung vor, eine beispielsweise als Verriegelungsmechanismus oder Bremsmechanismus ausgeführte Halteanordnung vorzusehen, die einen momentanen Einrückzustand oder einen dem momentanen Einrückzustand zugeordneten Halte-Einrückzustand der jeweiligen Kupplungsanordnung halten kann, ohne etwa die Elektromotoren der Kupplungsaktuatorik 400 dauerhaft bestromen zu müssen. Bevorzugte Ausführungsvarianten dieser Halteanordnung benötigen für dieses Halten lediglich eine Hilfsenergie.

Grundsätzlich kann eine Verriegelung bzw. Positionsfixierung in der gesamten Betätigungskette zwischen der Anpressplatte der jeweiligen Kupplungsanordnung und dem elektromechanischen Betätigungselement, etwa Elektromotor, des jeweiligen Aktuator realisiert sein, wobei neben einer kraftschlüssigen, beispielsweise reibschlüssigen Verriegelung oder Positionsfixierung auch eine formschlüssige Verriegelung oder Positionsfixierung vorgesehen sein kann und die Verriegelung oder Positionsfixierung stufenlos oder in diskreten Schritten arbeiten kann. Besonders vorteilhaft ist eine stufenlose Verriegelung oder Positionsfixierung, damit ein Kupplungszustand gehalten werden kann, in dem gerade das vom Verbrennungsmotor abgegebene Drehmoment übertragen wird, so dass eine Überanpressung nicht erforderlich ist. Die Zeitanteile des Betriebs des Verbrennungsmotors im Teillastbereich sind in der Regel sehr hoch, wobei die im Teillastbereich erforderlichen Anpresskräfte vergleichsweise niedrig sind und dementsprechend in der Regel auch recht kurze Verfahrwege des Aktuators ausreichen. Kleine Verfahrwege bei kleinen Kraftniveaus reduzieren die Betätigungsarbeit und verbessern die Energiebilanz. Dieser Vorteil bleibt erhalten, wenn bei einer stufenlosen Verriegelung bzw. Positionsfixierung ein momentaner Kupplungszustand der jeweiligen Kupplungsanordnung gehalten werden kann.

Eine stufenlose Verriegelung der Aktuatorik 400 ist beim Ausführungsbeispiel der Fig. 2 realisiert. Die Aktuatorik, die ein mit einem Ausgangsglied 410 bzw. 412 des jeweiligen Aktuators 402 bzw. 404 in der Art eines Zahnradgetriebes oder Schneckengetriebes in Eingriff stehendes Zahnradsegment 414 bzw. 416 und einen vorzugsweise schwenkbar daran gehaltenen Stößel 417 bzw. 418 aufweist, der an seinem anderen, vom Zahnradsegment 414 bzw. 416 abgelegenen Ende auf eine jeweils zugeordnete der Betätigungshülsen des Betätigungsmoduls 200 wirkt, ist mit einer wahlweise auf eines der beiden Zahnradsegmente 414 bzw. 416 wirkenden Halteanordnung 430 ausgeführt, die ein elektromechanisches Stellglied 432 und ein durch das Stellglied 432 axial verstellbares plattenförmiges Halteglied 434 aufweist. Eine Verbindungsstange zwischen dem Stellglied 432 und dem Halteelement 434 erstreckt sich längs der gemeinsamen Drehachse der beiden Zahnradsegmente 414 und 416. Eine die Zahnradsegmente 414 und 416 drehbar und das Stellglied 432 einschließlich dem Halteglied 434 sowie die Aktuatoren 402 und 404 stationär haltende Traganordnung ist in den Figuren nicht gezeigt.

Das Halteglied 434 ist durch eine Feder 436 in eine Mittelstellung oder Neutralstellung zwischen den beiden Zahnradsegmenten 414 und 416 federvorgespannt. Mittels des Stellglieds 432 kann das Halteglied 434 wahlweise mit dem Zahnradsegment 414 bzw. dem Zahnradsegment 416 bzw. einem auf dem jeweiligen Zahnradsegment vorgesehenen Reibbelag in reibschlüssigen Halteeingriff gebracht werden, so dass eine momentane Dreh- oder Schwenkstellung des jeweiligen Zahnradsegments 414 bzw. 416 und damit ein momentaner Kupplungszustand der zugeordneten Kupplungsanordnung gehalten wird. Wird das elektromechanische Stellglied 432 stromlos, so bewegt die Rückstellfeder 436 das Halteglied 434 zwangsweise in die Neutralstellung, so dass für die Halteanordnung 430 ein NORMALERWEISE-OFFEN-Systemverhalten und damit, wenn vorgesehen, für die gesamte Betätigungskette zwischen den Aktuatoren 402, 404 und den Kupplungsanordnungen insgesamt das vorteilhafte NORMALERWEISE-OFFEN-Systemverhalten realisiert ist.

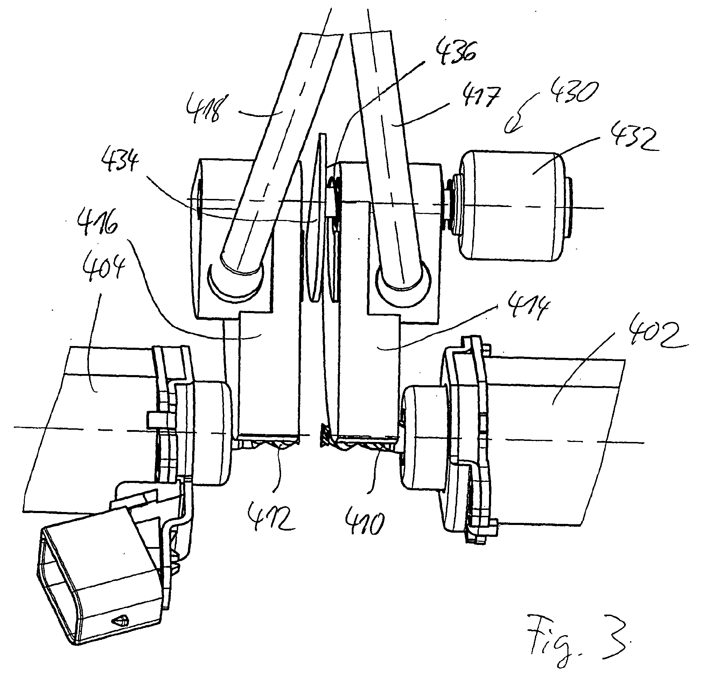

Die Halteanordnung, 430 der Fig. 2 und 3 kann zutreffend auch als "Bremse" bezeichnet werden, an Stelle des oben verwendeten Begriffs "Verriegelung", der einen formschlüssigen Eingriff suggerieren mag. Hier wird der Begriff "Verriegelung" aber allgemeiner verwendet und umfasst insbesondere auch eine reibschlüssige Fixierung.

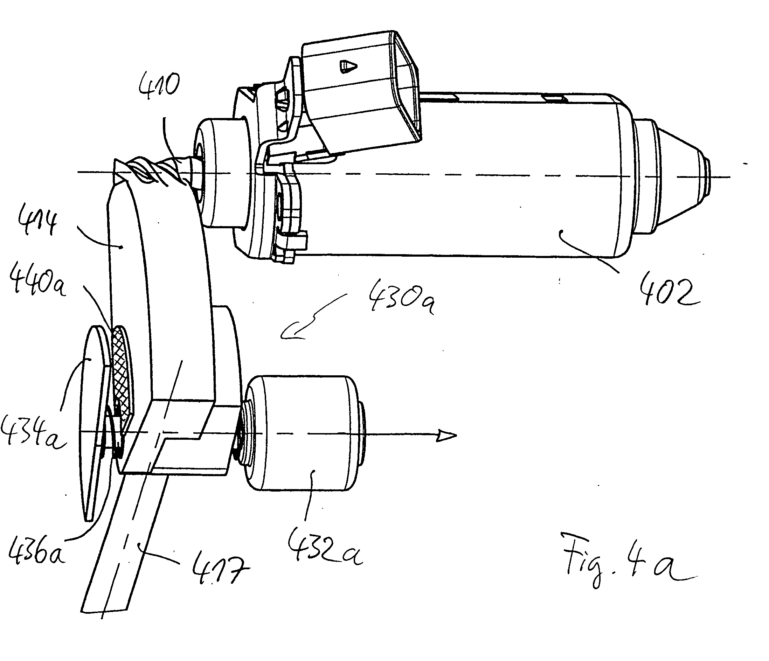

Es kann durchaus sehr zweckmäßig sein, für beide Betätigungsketten der beiden Kupplungsanordnungen jeweils eine eigene Halteanordnung zum Halten der jeweiligen Kupplungsanordnung in einem momentanen Kupplungszustand oder vorgegebenen Halte-Kupplungszustand zuzuordnen. Die Fig. 4a und 4b zeigen gemeinsam ein entsprechendes Beispiel. Dem Zahnradsegment 414 ist eine eigene Halteanordnung 430a mit dem elektromechanischen Stellglied 432a und der zugehörigen Halteplatte 434a und einer Rückstellfeder 436a zugeordnet, und dem Zahnradsegment 416 ist ebenfalls eine eigene Halteanordnung 430b mit dem elektromechanischen Stellglied 432b, der zugehörigen Halteplatte 434b und einer Rückstellfeder 436b zugeordnet. Ein auf dem Zahnradsegment 414 angeordneter Reibbelag ist mit 440a und ein auf dem Zahnradsegment 416 angeordneter Reibbelag ist mit 440b bezeichnet.

Angemerkt sei, dass die elektromechanische Ausführung des Stellglieds 432 bzw. der Stellglieder 432a und 432b nur ein zweckmäßiges Beispiel darstellt. Es kommen auch andere Wirkungsprinzipien für die Bereitstellung eines entsprechenden Stellglieds in Betracht, beispielsweise eine Piezoelementanordnung oder eine Halteelement-Bimetallelement-Anordnung. Eine weitere Möglichkeit ist ein druckfluidbetätigtes Stellglied.

Es ist durchaus auch denkbar, dass die Halteanordnung an einem anderen Element der Betätigungskette angreift, beispielsweise an den Ausgangsgliedern 410 und 412 der Aktuatoren 402 und 404, an den Betätigungsstößeln 417 und 418 oder auch unmittelbar an den Betätigungsgliedern, ggf. Betätigungshülsen, des Betätigungsmoduls 200. Ein Angriff am Ausgangsglied des jeweiligen Aktuators oder sogar eine in den Aktuator integrierte Halteanordnung hat den Vorteil, dass die Untersetzung des betreffenden Zahnradsegments 414 bzw. 416 auch in Bezug auf die von der Halteanordnung aufgebrachten Haltekräfte wirksam ist und insoweit geringere Haltekräfte ausreichen. Eine Zuordnung der Halteanordnung zu einer der jeweiligen Kupplungsanordnung näheren Glied der Betätigungskette hat hingegen den Vorteil, dass die dahinter auf Seite des jeweiligen Aktuators liegenden Glieder der Betätigungskette keine Haltekräfte übertragen müssen und insoweit entlastet sind.

Neben einer stufenlosen Verriegelung bzw. Positionsfixierung etwa entsprechend den Ausführungsbeispielen der Fig. 1 bis 4 kommt eine in diskreten Schritten oder Stufen, ggf. geometrisch vorgegebenen Stufen, arbeitende Verriegelung in Betracht. Durch entsprechende Auslegung der Stufen und Wahl der Stufenzahl kann ohne weiteres eine akzeptable Anpassung an den jeweiligen Lastzustand der betreffenden Kupplungsanordnung erreicht werden. Man kann jeweils eine Verriegelungsstufe auswählen, die das momentan anliegende Drehmoment abdeckt, so dass die Kupplungsanordnung das Drehmoment weiter übertragen kann. Man kann eine zweckmäßige Nachführung der Verriegelung vorsehen, um Kupplungsschlupf zu vermeiden. Wird die Obergrenze einer jeweiligen Stufe überschritten, so tritt eine Relativdrehzahl auf. Diese Relativdrehzahl kann dann als Eingangssignal zur Aktivierung der Kupplungsaktuatorik oder/und eines Stellglieds der Halteanordnung dienen, um die nächste Verriegelungsstufe einzustellen.

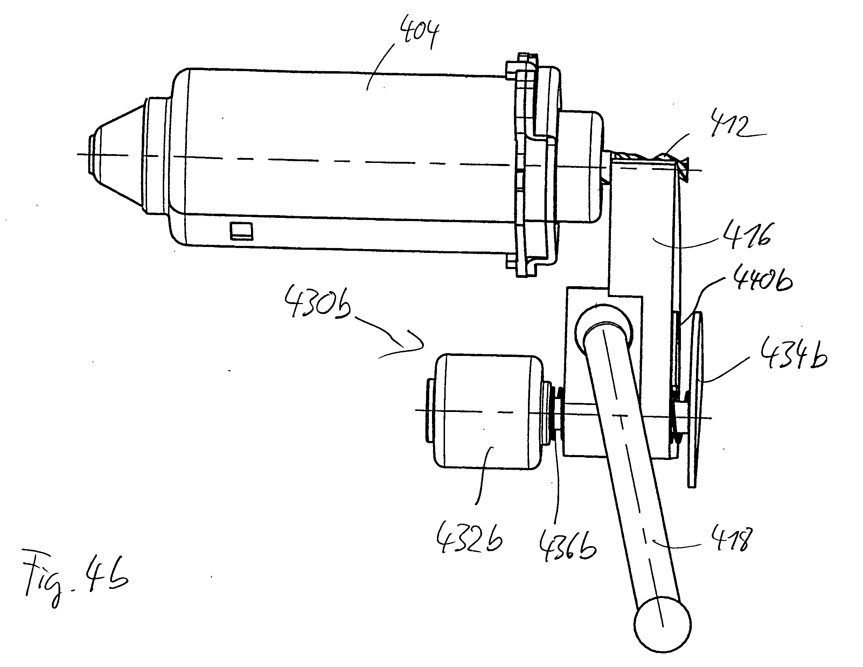

Fig. 5 zeigt ein Beispiel für eine eine stufenweise Verriegelung in der Art eines Einrastens vorstehende Halteanordnung 430c. Wie bei den Ausführungsbeispielen der Fig. 1 bis 4 wirkt ein Aktuator, beispielsweise der Aktuator 402, auf ein Zahnradsegment, vorliegend das Zahnradsegment 414. Das Zahnradsegment ist mit einer Rasterung 450 ausgeführt, mit der eine an einem stationären Träger schwenkbar angeordnete Sperrklinke 452 formschlüssig in Eingriff treten kann. Die Sperrklinke 452 ist durch eine Rückstellfeder 454 in Richtung eines Abhebens aus der Rasterung 450 vorgespannt.

Die Sperrklinke 452 ist als Arm eines zweiarmigen Hebels ausgeführt, dessen anderer Arm 456 mit einem Stellglied 458 zusamemnwirkt, derart, dass bei Erregung des Stellglieds 458 der Arm 456 in Richtung des Pfeils S gezogen und damit die Sperrklinge 452 gegen die Rückstellwirkung der Feder 454 in Eingriff mit der in diskreten Schritten ausgeführten Rasterung 450 geschwenkt wird.

Zu den erläuterten Ausführungsbeispielen und speziell den angesprochenen Figuren sei angemerkt, dass die Figuren teilweise nur schematisch sind und verschiedene, für den Fachmann selbstverständliche Details nicht zeigen, beispielsweise nicht die Zähne der Zahnradsegmente sowie - wie schon angesprochen - Trägeranordnungen für die verschiedenen Komponenten. Soweit zweckmäßig, wird man die verschiedenen stationären Komponenten so weit als möglich am Kupplungsgehäuse bzw. der Kupplungsgehäuseglocke anbringen bzw. abstützen.

## Patentansprüche

1. Kupplungssystem, umfassend eine Reibungskupplungseinrichtung (10) zur Anordnung im Antriebsstrang eines Kraftfahrzeugs mit wenigstens einer gegen in Ausrückrichtung wirkenden mechanischen Rückstellkräften einrückbaren Kupplungsanordnung (12, 32, 34; 14, 32, 36) und eine Betätigungseinrichtung (200, 400) zum Einleiten von im Einrücksinne gegen die Rückstellkräfte wirkenden, auf Betätigungskräften einer Aktuatoranordnung (402, 404) beruhenden Einrückkräften in die Reibungskupplungseinrichtung, um die Kupplungsanordnung im Einrücksinne zu betätigen,
**dadurch gekennzeichnet,**
**dass** eine der Reibungskupplungseinrichtung oder/und der Kupplungsanordnung oder/und der Betätigungseinrichtung oder/und der Aktuatoranordnung zugeordnete Halteanordnung (430; 430a, 430b; 430c) vorgesehen ist, mittels der die Kupplungsanordnung gegen die Wirkung der Rückstellkräfte unabhängig von der Erzeugung von Betätigungskräften durch die Aktuatoranordnung (402, 404) in einem momentanen Einrückzustand oder einem dem momentanen Einrückzustand zugeordneten Halte-Einrückzustand haltbar ist.

2. Kupplungssytem nach Anspruch 1, **dadurch gekennzeichnet, dass** die Betätigungseinrichtung wenigstens ein der Kupplungsanordnung zugeordnetes Betätigungsglied (222, 224) umfasst, das relativ zu wenigstens einem axial im Wesentlichen feststehenden Stützglied (220) zum Ausüben der Einrückkräfte axial verstellbar ist und zu einem der Kupplungsanordnung zugeordneten Aktuator gehört oder unter Vermittlung eines der Kupplungsanordnung zugeordneten Aktuators (402 bzw. 404) axial relativ zum Stützglied verstellbar ist.

3. Kupplungsystem nach Anspruch 2, **gekennzeichnet durch** einen derartigen Eingriff zwischen dem Betätigungsglied (222 bzw. 224) und dem Stützglied (220), dass eine unter Vermittlung des Aktuators dem Betätigungsglied erteilte Drehbewegung relativ zu dem gegen Verdrehung abgestützten Stützglied (220) in eine axiale Translationsbewegung des Betätigungsglieds relativ zu dem axial abgestützten Stützglied umgesetzt wird, um die Kupplungsanordnung im Einrücksinne zu betätigen.

4. Kupplungssystem nach Anspruch 3, **dadurch gekennzeichnet, dass** auf Grundlage der Rückstellkräfte dem Betätigungsglied (222 bzw. 224) eine zur Translationsbewegung entgegengesetzte Rück-Translationsbewegung erteilbar ist, die auf Grundlage des Eingriffs zwischen dem Betätigungsglied und dem Stützglied (220) in eine zur Drehbewegung entgegengesetzte Rück-Drehbewegung des Betätigungsglieds relativ zu dem axial abgestützten Stützglied umgesetzt wird.

5. Kupplungssystem nach einem der Ansprüche 2 bis 4, **dadurch gekennzeichnet, dass** das Betätigungsglied (222 bzw. 224) mit einem Ausgangsteil (410 bzw. 412) des vorzugsweise elektromotorischen Aktuators (402 bzw. 404) bewegungsverkoppelt oder bewegungsverkoppelbar ist.

6. Kupplungssystem nach Anspruch 5, **dadurch gekennzeichnet, dass** das Ausgangsteil (410 bzw. 412) ein um eine Achse dreh- oder schwenkbares Ausgangsteil ist.

7. Kupplungssystem nach Anspruch 5 oder 6, **gekennzeichnet durch** eine Koppelmechanik (410 bzw. 412), über die das Betätigungsglied (222 bzw. 224) mit dem Ausgangsteil (410 bzw. 412) bewegungsverkoppelt oder bewegungsverkoppelbar ist.

8. Kupplungssystem nach Anspruch 6 und 7, **dadurch gekennzeichnet, dass** die Koppelmechanik wenigstens ein bewegbar, insbesondere dreh- oder schwenkbar angeordnetes Eingangsteil (414 bzw. 416), das mit dem Ausgangsteil (410 bzw. 412) des Aktuators bewegungsverkoppelt oder bewegungsverkoppelbar ist, aufweist.

9. Kupplungssystem nach Anspruch 8, **dadurch gekennzeichnet, dass** die Koppelmechanik wenigstens ein bewegbar, insbesondere drehoder schwenkbar angeordnetes Ausgangsteil (417 bzw. 418), das mit dem Betätigungsglied bewegungsverkoppelt oder bewegungsverkoppelbar ist, aufweist.

10. Kupplungssystem nach Anspruch 8 und 9, **dadurch gekennzeichnet, dass** das Eingangsteil und das Ausgangsteil von einem einzigen Bauteil oder einer integral oder einteilig ausgeführten Bauteilgruppe oder eines einteilig ausgeführten Bauteils gebildet sind.

11. Kupplungssystem nach einem der Ansprüche 5 bis 10, **dadurch gekennzeichnet, dass** das Ausgangsteil (410 bzw. 412) des Aktuators oder/und die Koppelmechanik (406 bzw. 408) auf Grundlage der Rückstellkräfte in Richtung einer einem ausgerückten Zustand der Kupplungsanordnung entsprechenden Stellung verstellbar ist.

12. Kupplungssystem nach einem der Ansprüche 1 bis 11, **dadurch gekennzeichnet, dass** die Halteanordnung (430; 430a, 430b; 430c) dafür ausgebildet ist, wenigstens ein Glied (414 bzw. 416) einer von einem/dem Aktuator zu einer miteinander in paarweisen reibschlüssigen Eingriff bringbaren Reibflächenanordnung führenden Betätigungskette in einer momentanen Stellung oder einer der momentanen Stellung zugeordneten, zu dieser benachbarten Haltestellung zu halten.

13. Kupplungssystem nach Anspruch 12, **dadurch gekennzeichnet, dass** die Betätigungskette das/ein Ausgangsteil (410 bzw. 412) des Aktuators sowie ggf. wenigstens ein mit dem Ausgangsteil bewegungsverkoppeltes internes Teil, insbesondere Übertragungsteil oder Betätigungsteil, innerhalb des Aktuators umfasst oder/und dass die Betätigungskette wenigstens ein wenigstens eine Reibfläche der Reibflächenanordnung aufweisendes Bauteil (34 bzw. 36) der Kupplungsanordnung umfasst.

14. Kupplungssystem nach-Anspruch 13 sowie nach wenigstens einem der Ansprüche 2 bis 11, **dadurch gekennzeichnet, dass** die Betätigungskette das Betätigungsglied (222 bzw. 224) sowie ggf. wenigstens ein Koppelteil (414, 417; 416, 418), insbesondere Eingangsteil oder/und Ausgangsteil, der Koppelmechanik umfasst.

15. Kupplungssystem nach einem der Ansprüche 12 bis 14, **dadurch gekennzeichnet, dass** das betreffende Glied mit einem zugeordneten Halteglied (434; 434a bzw. 434b; 452) der Halteanordnung in Halteeingriff bringbar ist.

16. Kupplungssystem nach Anspruch 15, **dadurch gekennzeichnet, dass** der Halteeingriff ein formschlüssiger Eingriff oder ein kraftschlüssiger, gewünschtenfalls reibschlüssiger Eingriff ist.

17. Kupplungssystem nach Anspruch 15 oder 16, **dadurch gekennzeichnet, dass** das betreffende Glied über einen diesem zugeordneten kontinuierlichen Bewegungsbereich in jeder beliebigen momentanen Position durch den Halteeingriff mit dem Halteglied (434; 434a bzw. 434b) haltbar ist.

18. Kupplungssystem nach Anspruch 15 oder 16, **dadurch gekennzeichnet, dass** das betreffende Glied über einen diesem zugeordneten kontinuierlichen Bewegungsbereich nur in einer Mehrzahl von vorgegebenen diskreten Haltepositionen durch den Halteeingriff mit dem Halteglied (452) haltbar ist.

19. Kupplungssystem nach einem der Ansprüche 15 bis 18, **dadurch gekennzeichnet, dass** wenigstens ein Stellglied (432; 432a bzw. 432b; 458) vorgesehen ist, mittels dem das betreffende Glied und das zugeordnete Halteglied in Halteeingriff bringbar sind.

20. Kupplungssystem nach Anspruch 18 und 19, **dadurch gekennzeichnet, dass** auf Grundlage eines über die Kupplungsanordnung zu übertragenden Drehmoments oder/und auf Grundlage einer ggf. auftretenden Schlupfdrehzahl der Kupplungsanordnung das Stellglied ansteuerbar oder/und das Halteglied relativ zu dem betreffenden Glied verstellbar ist, um eine auf das zu übertragende Drehmoment oder/und einer Vorgabe betreffend die Schlupfdrehzahl oder die Schlupffreiheit abgestimmte Halteposition einzustellen, erforderlichenfalls im Zusammenwirken mit einer Verstellung des betreffenden Glieds mittels dem Aktuator.

21. Kupplungssystem nach Anspruch 19 oder 20, **dadurch gekennzeichnet, dass** das betreffende Glied und das zugeordnete Halteglied (434; 434a bzw. 434b; 452) durch das Stellglied (432; 432a bzw. 434b; 458) gegen auf wenigstens eines dieser Glieder wirkende mechanische Rückstellkräfte in Halteeingriff bringbar sind und der Halteeingriff auf Grundlage der Rückstellkräfte aufhebbar ist.

22. Kupplungssystem nach einem der Ansprüche 19 bis 21, **dadurch gekennzeichnet, dass** das Stellglied (432; 432a bzw. 434b; 458) wenigstens einen Elektromotor, wenigstens einen elektrisch erregbaren Magneten, wenigstens ein Bimetallelement mit zugeordneter Heizelementanordnung, wenigstens eine Piezoelementanordnung oder wenigstens eine auf Grundlage eines Druckfluids betätigbare Kraftzylinderanordnung zum Erzeugen von Stellkräften aufweist.

23. Kupplungssystem nach einem der Ansprüche 15 bis 22, **dadurch gekennzeichnet, dass** das Betätigungsglied das betreffende Glied ist.

24. Kupplungssystem nach einem der Ansprüche 15 bis 22, **dadurch gekennzeichnet, dass** das Ausgangsteil des Aktuators oder ein damit bewegungsverkoppeltes internes Teil des Aktuators das betreffende Glied ist.

25. Kupplungssystem nach einem der Ansprüche 15 bis 22, **dadurch gekennzeichnet, dass** das oder ein Koppelteil (414 bzw. 416) der Koppelmechanik, insbesondere das Eingangsteil (414 bzw. 416) oder/und das Ausgangsteil der Koppelmechanik, das betreffende Glied ist.

26. Kupplungssystem nach einem der Ansprüche 15 bis 25, **dadurch gekennzeichnet, dass** das Ausgangsteil (410 bzw. 412) des Aktuators und das/ein Eingangsteil (414 bzw. 416) der Koppelmechanik über ein Schnecken- oder Zahnradgetriebe bewegungsverkoppelt sind oder ein eine Bewegungsverkoppelung vorsehendes Schnecken- oder Zahnradgetriebe bilden.

27. Kupplungssystem nach Anspruch 26, **dadurch gekennzeichnet, dass** das als Zahnrad oder Zahnradsegment ausgeführte Eingangsteil (414 bzw. 416) der Koppelmechanik oder ein damit bewegungsverkoppeltes oder bewegungsverkoppelbares Stößelelement zur direkten oder indirekten Ankoppelung am Betätigungsglied (222 bzw. 224) das betreffende Glied ist.

28. Kupplungssystem nach einem der Ansprüche 1 bis 27, **dadurch gekennzeichnet, dass** die Kupplungsanordnung (12, 32, 34; 14, 32, 36) eine trockenlaufende Kupplungsanordnung vorzugsweise der Reibscheibenbauart ist.

29. Kupplungssystem nach einem der Ansprüche 1 bis 28, **dadurch gekennzeichnet, dass** die Kupplungseinrichtung (10) eine Doppeloder Mehrfach-Kupplungseinrichtung mit einer einem ersten Getriebezug zugeordneten ersten Kupplungsanordnung (12, 32, 34) und einer einem zweiten Getriebezug zugeordneten zweiten Kupplungsanordnung (14, 32, 36) ist, die unabhängig voneinander mittels eines jeweiligen Aktuators (402 bzw. 404) betätigbar sind.

30. Kupplungssytem nach Anspruch 29 sowie nach Anspruch 19, **dadurch gekennzeichnet, dass** die mit beiden Kupplungsanordnungen (12, 32, 34; 14, 32, 36) in Wirkverbindung stehende oder bringbare Halteanordnung (430) mit einem einzigen Stellglied (432) ausgeführt ist, unter dessen Vermittlung wahlweise die erste oder die zweite Kupplungsanordnung unabhängig von der Erzeugung von Betätigungskräften durch den jeweiligen Aktuator (402 bzw. 404) in einem momentanen Einrückzustand oder einem dem momentanen Einrückzustand zugeordneten Halte-Einrückzustand haltbar ist.

31. Kupplungsystem nach Anspruch 30, **dadurch gekennzeichnet, dass** zu einem Zeitpunkt nur eine der beiden Kupplungsanordnungen (12, 32, 34; 14, 32, 36) in einem momentanen Einrückzustand oder einem dem momentanen Einrückzustand zugeordneten Halte-Einrückzustand haltbar ist.

32. Kupplungssytem nach Anspruch 29 sowie nach Anspruch 19, **dadurch gekennzeichnet, dass** zwei voneinander unabhängige Halteanordnungen (430a, 430b) vorgesehen sind, um die beiden Kupplungsanordnungen (12, 32, 34; 14, 32, 36) unabhängig voneinander sowie unabhängig von der Erzeugung von Betätigungskräften durch den jeweiligen Aktuator (402 bzw. 404) in einem momentanen Einrückzustand oder einem dem momentanen Einrückzustand zugeordneten Halte-Einrückzustand halten zu können.

33. Halteanordnung zum Halten wenigstens einer Kupplungsanordnung (12, 32, 34; 14, 32, 36) eines Kupplungssystems nach einem der vorhergehenden Ansprüche in einem momentanen Einrückzustand oder einem dem momentanen Einrückzustand zugeordneten Halte-Einrückzustand unabhängig von der Erzeugung von Betätigungskräften durch eine dem Einrücken der Kupplungsanordnung dienenden Aktuatoranordnung (402, 404).
